# EUROPÄISCHE PATENTSCHRIFT

(11) **EP 1 079 222 B1**
(45) Veröffentlichungstag und Bekanntmachung des Hinweises auf die Patenterteilung: **12.05.2010**
(21) Anmeldenummer: 00117790.6
(22) Anmeldetag: 18.08.2000
(51) Int. Cl.: G01M 1/34

(54) **Verfahren und Vorrichtung zum Unwuchtsausgleich durch Materialentfernung**
Procedure and device for compensating unbalance by removing material
Procédé et dispositif de compensation de balourd par enlèvement de matériel

(30) Priorität: 26.08.1999 DE 19940469
(43) Veröffentlichungstag der Anmeldung: 28.02.2001
(73) Patentinhaber: Schenck RoTec GmbH, 64293 Darmstadt (DE)
(72) Erfinder: Schönfeld, Harald, 64291 Darmstadt (DE)
(74) Vertreter: Haar, Lucas Heinz Jörn

(56) Entgegenhaltungen:
- DE-A- 2 638 876
- DE-A- 4 229 521
- GB-A- 1 023 670
- US-A- 4 442 712
- PATENT ABSTRACTS OF JAPAN vol. 017, no. 654 (P-1653), 3. Dezember 1993 (1993-12-03) & JP 05 215634 A (MITSUBA ELECTRIC MFG CO LTD), 24. August 1993 (1993-08-24)

## Beschreibung

Die Erfindung bezieht sich auf ein Verfahren zum Ausgleich einer ermittelten Unwucht an einem Rotor nach dem Oberbegriff des Patentanspruchs 1 und eine Vorrichtung hierzu nach dem Oberbegriff des Patentanspruchs 7.

Beim Auswuchten von Rotoren wird zunächst deren Unwucht in einer Unwuchtmeßmaschine bzw. Auswuchtmaschine ermittelt. Die Unwucht wird im allgemeinen bezogen auf eine oder mehrere Ausgleichsebenen und nach Größe und Winkellage bestimmt; damit ist ein polarer Unwuchtausgleich möglich. Kann der Unwuchtausgleich an Rotoren nur an bestimmten längs des Umfangs verteilten Stellen durchgeführt werden, wird der Ausgleich an dafür geeigneten Stellen in Komponenten des Ausgleichsvektors durchgeführt. Bei Ankern von Elektromaschinen sind dies die Polschuhe, die über Stege mit dem Ankerkern verbunden sind, zwischen denen die Kupferdrahtwicklungen angeordnet sind. Dabei sollen die Polschuhe möglichst wenig geschwächt und insbesondere ein Durchfräsen oder Schleifen bis auf die Wicklungen sicher vermieden werden; ferner soll der Komponentenausgleich an den dafür geeigneten Stellen in einem Arbeitsgang erfolgen.

Aus JP5215634 A sind ein Verfahren und eine Vorrichtung der eingangs genannten Art bekannt. Die Vorrichtung weist zwei Ausgleichswerkzeuge zur Materialentfernung auf, die auf einer quer zur Achse des auszuwuchtenden Rotors angeordneten Antriebsachse in einem solchen Abstand angeordnet sind, dass der Materialabtrag entweder nur an einer oder an zwei unmittelbar benachbarten Ausgleichsstellen erfolgt. Um die Größe des Materialabtrags zu bestimmen, sind die Ausgleichswerkzeuge ausschließlich radial in Bezug auf den auszugleichenden Rotor verstellbar. Außerdem ist der Rotor in einer Spannvorrichtung gehalten, die um eine zur Rotorachse parallele Achse schwenkbar ist, wobei die Mittelachse dieser Achse in der Mitte zwischen den beiden Ausgleichswerkzeugen und im Schnittpunkt der Tangenten an zwei Ausgleichsstellen des Rotors verläuft. Durch Drehen der Spannvorrichtung und dieser Achse kann die Lage des Rotors gegenüber den Ausgleichswerkzeugen so verändert werden, dass an den beiden Ausgleichsstellen, wenn für den Unwuchtausgleich erforderlich, ein verschieden großer Materialabtrag erfolgt.

Eine auf dem gleichen Prinzip beruhende Vorrichtung zum Unwuchtausgleich ist aus GB1023670 A bekannt. Auch bei dieser Vorrichtung ist der auszugleichende Rotor mit acht äquidistanten Ausgleichsstellen in einer drehbaren Vorrichtung gehalten, deren Drehachse sich in der Mitte zwischen zwei Ausgleichsstellen des Rotors befindet. Zwei Ausgleichswerkzeuge sind im festen Abstand auf der Spindel eines Motors angeordnet, der um eine im Abstand vom Rotor angeordnete Achse derart schwenkbar ist, dass beide Ausgleichswerkzeuge durch eine Schwenkbewegung mit den Ausgleichsstellen in Eingriff gebracht werden könnten. Auch hier kann durch Drehen der Haltevorrichtung der gewünschte unterschiedliche Materialabtrag an den beiden benachbarten Ausgleichsstellen bewirkt werden.

Es ist weiterhin aus US 4,442,712 A ein Verfahren und eine Vorrichtung zum Ausgleich der Unwucht eines Rotors bekannt, der durch seine Form vorgegebene Ausgleichsstellen zum Anbringen oder Entfernen von Material hat. Der Ausgleich erfolgt hierbei an einer oder mehreren Ausgleichsstellen in ununterbrochener Folge je nach Ausgleichsumfang und winkelposition und wird durch eine logische Entscheidungsschaltung bewirkt, welche auch festlegt, ob die Ausgleichsschritte gleichzeitig oder einer nach dem anderen ausgeführt werden. Der Ausgleich kann hierbei mit einem einzelnen Ausgleichswerkzeug, mit zwei unabhängig steuerbaren einzelnen Ausgleichswerkzeugen oder mit einem Doppelausgleichswerkzeug oder auch zwei unabhängig gesteuerten Doppelausgleichswerkzeugen erfolgen. Die Ausgleichspunkte befinden sich hierbei immer ohne Unterbrechung unmittelbar nebeneinander, so das der Ausgleich durch Entfernen der kleinsten möglichen Materialmenge erfolgt.

Ein weiteres Verfahren zum Unwuchtausgleich ist aus der DE 42 29 521 A1 bekannt. Hier wird der Komponentenausgleich an einem Elektroanker in einem Arbeitsgang vorgenommen. Bei diesem bekannten Verfahren werden drei auf einer Werkzeugspindel montierte Ausgleichswerkzeuge verwendet, die zwecks Materialabtrag linear sowohl in Achsrichtung der Werkzeugspindel tangential zum Rotor unwuchtabhängig positioniert als auch in radialer Richtung zum Eingriff in den Rotor verschoben werden. Der Rotor wird bei diesem bekannten Verfahren so weit gedreht, daß der Polschuh, bei dem die größte Ausgleichsmasse zu entfernen ist, mit seiner Mittenachse auf das mittlere der drei Ausgleichswerkzeuge gerichtet ist. Vor Durchführung des Ausgleichsvorgangs werden die Ausgleichswerkzeuge mit der Werkzeugspindel tangential um einen durch die ermittelte auszugleichende Unwucht bestimmten Weg verschoben. Der Rotor wird den Ausgleichswerkzeugen durch stufenloses Verdrehen um seine Achse um einen errechneten Winkel nachgeführt, der dem Verschiebeweg und der Verschieberichtung des mittleren Ausgleichswerkzeugs entspricht. Zum Unwuchtausgleich werden danach die Ausgleichswerkzeuge um einen linearen Weg radial zum Rotor verschoben, so daß die Ausgleichswerkzeuge mit einer errechneten Eindringtiefe den Materialabtrag vornehmen. Bei dem bekannten Verfahren ist als nachteilig anzusehen, daß der Rotor durch Verdrehen um seine Achse der Verschiebung der Ausgleichswerkzeuge nachgeführt werden muß.

Aufgabe der Erfindung ist es deshalb, ein verbessertes Verfahren der eingangs genannten Art zum Ausgleich einer ermittelten Unwucht und eine hierzu geeignete Vorrichtung zu schaffen, mit welcher bei möglichst einfachem Aufbau ein genauer Unwuchtausgleich in einem Arbeitsgang durchführbar ist.

Erfindungsgemäß wird diese Aufgabe durch die in den Patentansprüchen 1 und 4 angegebenen Merkmale gelöst. Die Erfindung hat den Vorteil, daß die Nachführung des Rotors durch Verdrehen des Rotors um seine Achse nicht erforderlich ist, so daß sich der Aufbau der Vorrichtung und die Durchführung des Verfahrens erheblich vereinfachen. Der Rotoranker bleibt wie beim Komponentenausgleich in zwei Bearbeitungsschritten in einer teilungsgemäßen Stellung. Dies ist besonders vorteilhaft, wenn die Unwuchtmessung und der Unwuchtausgleich auf verschiedenen Maschinen oder in verschiedenen Stationen einer Anlage durchgeführt werden, da der Rotor nur in eine seiner teilungsgemäßen Stellungen zu bringen ist und ein kontinuierliches Eindrehen in Bearbeitungslagen nicht erforderlich ist; eine Eindrehvorrichtung hierfür kann damit entfallen. Die Winkellageneinstellung der Ausgleichsunwucht wird erfindungsgemäß über nur zwei Ausgleichswerkzeuge vorgenommen, so daß auch ein zwischengeordnetes drittes Ausgleichswerkzeug hierfür nicht erforderlich ist. Es hat sich als besonders vorteilhaft herausgestellt, daß die Winkellageneinstellung über einen großen teilungsgemäßen Winkelbereich mit kleinen tangentialen Verschiebewegen des Ausgleichswerkzeugsatzes erzielt werden kann. Durch das schräge Eintauchen der Ausgleichswerkzeuge ergibt sich eine größere Schlitzlänge und damit bessere Ausnutzung des zur Verfügung stehenden Polschuhmaterials. Darüberhinaus ist bei Nichtbearbeitung des Polschuhs zwischen den Ausgleichswerkzeugen bei Bedarf ohne weiteres ein zweiter Ausgleichsschritt möglich. Durch das Freilassen dieses Polschuhs erfolgt nach der Erfindung die Abstützung des Rotors an mindestens diesem Polschuh wird die Heranziehung dieses Polschuhs zum teilungsgemäßen Ausrichten des Rotors in den durch die Polschuhzahl vorgegebenen Raststellungen.

In einer vorteilhaften Weiterbildung der Erfindung tauchen die Ausgleichswerkzeuge etwa mittig bezüglich der Ausgleichsstellen in den Rotor ein, wobei dann bei maximaler Eintauchtiefe das Bearbeitungsprofil mittig zur Stegachse liegt und so und durch das schräge Eintauchen unter beispielsweise 45° die betreffende Ausgleichsstelle, z.B. ein Polschuh eines Elektroankers, möglichst wenig geschwächt wird.

Erfindungsgemäß wird in einer weiteren Ausgestaltung vorgesehen, daß mit den Ausgleichskomponenten ein in einem einer Ausgleichsstellenteilung entsprechenden Winkelbereich, der sich beiderseits einer Ausgleichsstelle oder beiderseits einer Mittelebene zwischen zwei Ausgleichsstellen erstreckt, liegender Unwuchtvektor ausgeglichen wird. Sowohl bei einer geraden als auch bei ungerader Anzahl von zwischengeordneten Ausgleichsstellen ist stets nur eine teilungsgemäße Verdrehung des Rotors um eine Raststelle erforderlich, wenn der auszugleichende Unwuchtvektor benachbart zum angegebenen Winkelbereich liegt. Die Erfindung kann bei gerader und ungerader Ausgleichsstellenzahl des Rotors zur Anwendung kommen.

Weiterbildungen der Erfindung sind in den abhängigen Ansprüchen angegeben.

Die Erfindung wird im folgenden anhand von in der Zeichnung dargestellten Ausführungsbeispielen näher erläutert. Es zeigen:
- Fig. 1: eine schematische Darstellung einer Vorrichtung zum Unwuchtausgleich an einem 12-poligen Rotor, bei der die auszugleichende Unwucht U in der Stegachse eines Polschuhs verläuft,
- Fig. 2: eine Schemadarstellung bei einem Rotor mit acht möglichen Ausgleichsstellen

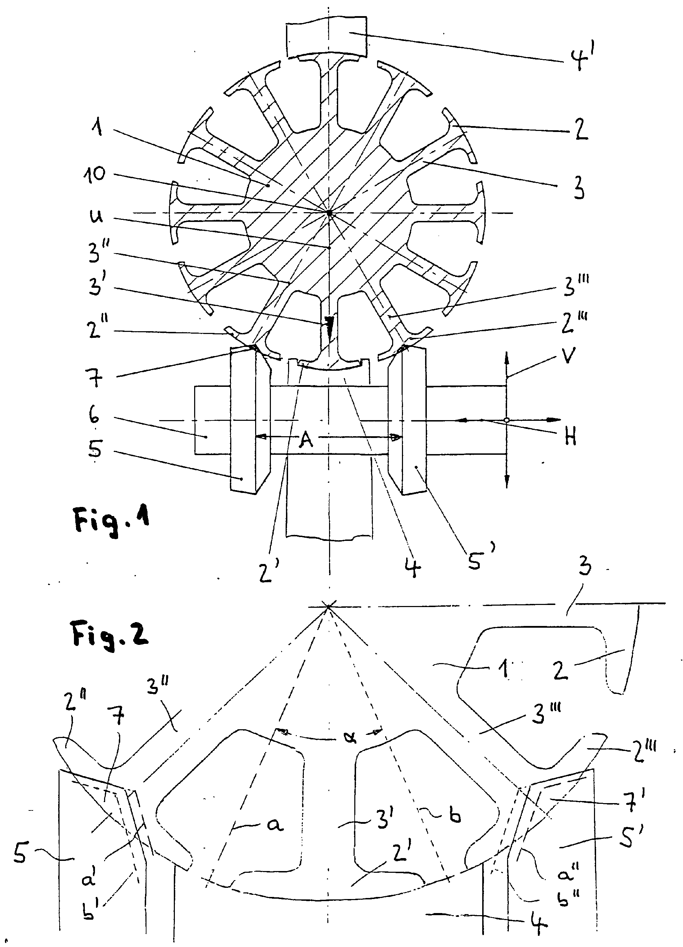

In Fig. 1 ist als Rotor 1 der Anker einer Elektromaschine schematisch im Schnitt durch eine Ausgleichsebene dargestellt. Die Erfindung kann jedoch bei jedem Rotor eingesetzt werden, der längs eines Rotorumfangs äquidistant angeordnete Stellen zum Unwuchtausgleich durch Materialabtrag aufweist, wie z.B. profilierte Wellen oder Rotoren mit radialen Fortsätzen wie Schaufeln oder Flügeln; die Erfindung ist aber auch anwendbar bei Rotoren mit glatten Umfangsoberflächen in der oder den Ausgleichsebenen. Der Anker weist zwölf Polschuhe 2 auf, die über Stege 3 mit dem Ankerkern in Verbindung stehen. In den Bereichen zwischen den Polschuhen 2 und den Stegen 3 sind die nicht dargestellten Kupferdrahtwicklungen des Ankers angeordnet. Die Polschuhe 2 sind die möglichen Ausgleichsstellen des Rotors.

Im dargestellten Ausführungsbeispiel nach Fig. 1 weist der Rotor 1 eine auszugleichende Unwucht U auf, die in der Mittelebene des in der Zeichnung unteren Steges 3' zwischen Ankerkern und Polschuh 2'liegt und nach unten weist. Zum Unwuchtausgleich ist der Rotor 1 über den Polschuh 2' und den diametral gegenüberliegenden Polschuh mittels einer Halterung fixiert. Die Halterung weist zwei Halteelemente 4, 4' auf, von denen das untere Halteelement 4 den Rotor 1 in einer durch die 12er-Teilung definierten Raststellung hält. Die Fixierung des Rotors in einer Raststellung kann ebenso wie seine Abstützung stattdessen durch Einrichtungen erfolgen, die an Auswuchtmaschinen ohnehin vorhanden sind.

Der Unwuchtausgleich erfolgt über Materialentfernungen an den Polschuhen 2'*'* und 2''*'*, die in der Zeichnung links und rechts vom Polschuh 2' angeordnet sind. Es können jedoch auch zwei Polschuhe ausgewählt werden, die durch zwei oder mehr dazwischenliegende Polschuhe getrennt sind.

Zum Materialabtrag an den Polschuhen 2'*'* und 2''*'* sind zwei Ausgleichswerkzeuge 5, 5' vorgesehen, die in festem gegenseitigem Abstand auf einer Werkzeugspindel 6 angeordnet sind. Die Ausgleichswerkzeuge 5, 5' können z.B Scheibenfräser oder Schleifscheiben sein, die zwecks Materialabtrag um die Spindelachse rotieren, beispielsweise mittels der angetriebenen Werkzeugspindel 6. Der axiale Abstand der Ausgleichswerkzeuge 5, 5' wird im wesentlichen durch den Mittenabstand der zum Ausgleich ausgewählten Polschuhe 2', 2''*'* bestimmt, im Beispiel nach Fig. 1 ist dies der Abstand A. Bei maximaler Eintauchtiefe soll das Bearbeitungsprofil dann mittig zur Stegachse liegen. Im Abstand A weisen die Ausgleichswerkzeuge jeweils die Spitze eines im wesentlichen dreieckförmigen Bearbeitungsprofils 7, 7' auf, das auch im Hinblick auf die Polschuhform unter Berücksichtigung des Stegübergangs gewählt ist. Die Spitze kann dabei auch abgeflacht sein, um möglichst viel Material oberflächennah entfernen zu können. Die Dreieckform ist dabei so gewählt, daß die Mittelebene des Steges den Winkel an der bearbeitenden Dreiecksspitze in etwa halbiert, da so durch das sich in radialer Richtung verjüngende Bearbeitungsprofil 7, 7' eine maximale radiale Bearbeitungstiefe erzielbar ist. Der Winkel an der Dreiecksspitze liegt vorzugsweise im Bereich zwischen 90° und 120°, abhängig von der Auswahl und der Ausgestaltung des Polschuhs und des Stegübergangs. Mit dem gewählten Bearbeitungsprofil soll möglichst viel Material oberflächennah entfernbar sein.

Die Werkzeugspindel 6 ist im dargestellten Beispiel unterhalb des Rotors 1 mit horizontaler Ausrichtung angebracht; es kann jedoch bei Bedarf die ganze Vorrichtung zum Unwuchtausgleich um beliebige Winkel, z.B. um 90°, um die Rotorachse 10 geschwenkt angeordnet werden. Die Werkzeugspindel 6 ist in mindestens zwei Richtungen stufenlos verschiebbar, nämlich in Richtung H tangential zum Rotor 1 und quer zur Rotorachse 10 und damit in der Horizontalen und in der Richtung V, nämlich radial und damit in der Vertikalen.

Eine bedarfsweise vorgesehene Verschiebung in der dritten Koordinatenrichtung, nämlich parallel zur Rotorachse 10, ermöglicht die Entfernung weiteren Materials durch Erstreckung des Bearbeitungsschlitzes parallel zur Rotorachse 10 zu beiden Seiten der Ausgleichsebene.

Der Antrieb zur Verschiebung der Werkzeugspindel 6 kann elektrisch, hydraulisch oder durch andere bekannte Antriebsmechanismen erfolgen.

Anstelle der Verschiebung der Werkzeugspindel 6 kann auch der Rotor 1 verschoben werden; es kann auch vorgesehen werden, daß Werkzeugspindel 6 und Rotor 1 Verschiebebewegungen durchführen.

Zum Ausgleich der in Fig. 1 dargestellten Unwucht U wird die Werkzeugspindel 6 in horizontaler bzw. tangentialer Richtung nicht verschoben und befindet sich somit in der dargestellten symmetrischen Lage mit den Spitzen der Ausgleichswerkzeuge 5', 5'*'* jeweils im Abstand A/2 von der Mittelebene des Stegs 3'. Die Eindringtiefe der Ausgleichswerkzeuge 5', 5'*'* wird durch eine nicht dargestellte Auswerteeinrichtung auf der Grundlage der auszugleichenden Unwucht U und der spezifischen Verhältnisse von Rotor 1 und Bearbeitungsprofil der Ausgleichswerkzeuge 5' , 5'*'* ermittelt und die Werkzeugspindel 6 um den entsprechenden Weg in der Vertikalrichtung V zur Materialentfernung verschoben.

Die Situation bei einer nicht in der Mittelebene eines Stegs 3 verlaufenden Unwucht wird im folgenden anhand der Fig. 2 erläutert. Dargestellt ist aus Gründen der Übersichtlichkeit ein Rotor 1 mit acht Polschuhen 2, also mit einer Winkel- bzw. Ausgleichsstellenteilung von 45°. Die ermittelte Unwucht kann im dargestellten Beispiel in dem durch die beiden unterschiedlich gestrichelten Linien a, b angegebenen Winkelbereich liegen, wobei der Winkel α dieses Winkelbereichs einer Teilung des Rotors 1 entspricht und damit 45° beträgt. Die Linien a und b und damit der Winkelbereich liegen symmetrisch zur Mittel-ebene des Stegs 3'. Liegt die Unwucht außerhalb dieses Winkelbereichs, ist der Rotor 1 vor dem Ausgleich durch schrittweise Drehung um eine oder mehrere Ausgleichsstellenteilungen in die geeignete Raststellung zu überführen, in der dann die Unwucht innerhalb des Winkelbereichs um die Mittelebene des dann nach unten weisenden Rotorstegs liegt, an dessen Polschuh jedoch selbst kein Ausgleich vorgenommen wird.

In der Fig. 2 sind die Ausgleichswerkzeuge 5 und 5' in drei verschiedenen Stellungen angedeutet; mit nicht unterbrochenen Linien ist die axiale und radiale Stellung der Ausgleichswerkzeuge 5 und 5' dargestellt, mit der eine in der Stegmitte des Stegs 3' verlaufende Unwucht ausgeglichen wird. Eine Unwucht, die in Richtung der gestrichelten Linie a verläuft, ist mit den Ausgleichswerkzeugen 5, 5' in der axial und radial verschobenen Stellung a', a*''* ausgleichbar, in der das Ausgleichswerkzeug 5 am Polschuh 2*''* des Stegs 3*''* bei Verschiebung nach a*'* mehr Material entfernt als das Ausgleichswerkzeug 5' bei Verschiebung in die Stellung a*''* am Polschuh 2''*'*. Eine Unwucht, die in Richtung der eng gestrichelten Linie b verläuft, ist mit den Ausgleichswerkzeugen 5, 5' in der axial und radial verschobenen Stellung b*'*, b*''* ausgleichbar. In allen dargestellten Stellungen und allen Zwischenstellungen der Ausgleichswerkzeuge 5, 5' sind beide Ausgleichswerkzeuge 5, 5' in Eingriff. Die Spitze des Bearbeitungsprofils 7, 7' des tiefer eindringenden Ausgleichswerkzeugs 5 oder 5' liegt bei maximaler Eindringtiefe in der Mittelebene des betreffenden Steges 3*''*, 3*'''*. Der Winkel an der Spitze des Bearbeitungsprofils 7, 7' liegt im dargestellten Beispiel bei etwa 120° und kann bei Bedarf bis ca.160° gewählt werden und ist damit größer als der bei dem Rotor mit 12er Teilung nach Fig. 1 gewählte Winkel der Bearbeitungsspitze von etwa 90°. Der Winkelbereich an der Spitze des Bearbeitungsprofils 7, 7' erstreckt sich in etwa symmetrisch zur Mittelebene des Stegs 3*''*, 3*'''*. Die maximale tangentiale Verschiebung der Ausgleichswerkzeuge 5, 5' in die Stellung a*'*, a'*'* oder die Stellung b*'*, b'*'* entspricht im dargestellten Beispiel etwa 1/4 der maximalen Eindringtiefe in Stegrichtung

Nicht dargestellt ist eine Ausführungsform, bei der bei einem Rotor mit 12er Teilung, wie er in Fig. 1 dargestellt ist, statt nur eines Polschuhs zwei Polschuhe zwischen den Polschuhen, an denen der Ausgleich vorgenommen werden soll, angeordnet sind. Der Rotor ist dabei in einer Stellung, in der die Mittelebene zwischen zwei Polschuhen nach unten weist, teilungsgemäß fixierbar. Auch mit dieser Anordnung wird ein teilungsgemäßer Winkelbereich, in dem die auszugleichende Unwucht liegen kann, erreicht, d.h. im Fall eines Rotors mit 12 Ausgleichsstellen ein Winkelbereich von 30° zwischen zwei benachbarten Stegen.

## Patentansprüche

1. Verfahren zum Ausgleich einer ermittelten Unwucht an einem Rotor (1), der längs eines Rotorumfangs äquidistant angeordnete Ausgleichsstellen zum Unwuchtausgleich durch Materialentfernung aufweist, bei dem einen festen gegenseitigen Abstand aufweisende Ausgleichswerkzeuge (5, 5') vorgesehen sind und bei dem die Ausgleichswerkzeuge (5, 5') quer zur Rotorachse durch eine aus der ermittelten Rotorunwucht resultierende Verschiebung zwischen Rotor (1) und Ausgleichswerkzeugen (5, 5') in tangentialer Richtung positionierbar sind und zum Materialabtrag durch eine aus der ermittelten Rotorunwucht resultierende Verschiebung zumindest in radialer Richtung zwischen Rotor (1) und Ausgleichswerkzeugen (5, 5') in den Rotor (1) hinein bewegbar sind, wobei nur zwei Ausgleichswerkzeuge (5, 5') vorgesehen werden, die beim Unwuchtausgleich stets gemeinsam in Eingriff mit dem Rotor (1) gebracht werden und mit den Ausgleichswerkzeugen (5, 5') durch Materialabtrag Ausgleichskomponenten eines Ausgleichsvektors erzeugt werden, wobei die gemeinsam erzeugten Ausgleichskomponenten im wesentlichen im Winkel eines ganzzahligen Vielfachen der Teilung der Ausgleichsstellen zueinander verlaufen,
**dadurch gekennzeichnet, dass** der Rotor (1) zum Unwuchtausgleich durch Materialentfernung in einer durch die Ausgleichsstellen definierten Raststellung mittels einer Halterung fixiert wird und
dass eine zwischen den beiden Ausgleichsstellen für die Materialentfernung angeordnete Ausgleichsstelle zur Halterung des Rotors (1) verwendet wird.

2. Verfahren nach Anspruch 1, **dadurch gekennzeichnet, dass** das Eintauchen der Ausgleichswerkzeuge (5, 5') in den Rotor (1) etwa in der Mitte der Ausgleichsstellen erfolgt.

3. Verfahren nach einem der vorhergehenden Ansprüche, **dadurch gekennzeichnet, dass** mit den Ausgleichskomponenten ein Unwuchtvektor ausgeglichen wird, der in einem der Winkel- bzw. Ausgleichsstellenteilung entsprechenden Winkelbereich (α) liegt, der sich beiderseits einer Ausgleichsstelle oder beiderseits einer Mittelebene erstreckt, die zwischen den zwei zur Erzeugung von Ausgleichskomponenten benutzten Ausgleichsstellen liegt.

4. Vorrichtung zum Ausgleich einer ermittelten Unwucht an einem Rotor (1), der längs eines Rotorumfangs äquidistant angeordnete Ausgleichsstellen zum Unwuchtausgleich durch Materialentfernung aufweist, mit einer Halterung für den Rotor (1) und mit nur zwei, einen festen gegenseitigen Abstand aufweisenden Ausgleichswerkzeugen (5, 5'), wobei der Rotor (1) und oder die Ausgleichswerkzeuge (5, 5') in tangentialer und radialer Richtung verschiebbar sind, wobei die Ausgleichswerkzeuge (5, 5') in einem im wesentlichen einem ganzzahligen Vielfachen größer eins der Ausgleichsstellenteilung entsprechenden Abstand (A) zueinander angeordnet sind
**dadurch gekennzeichnet, dass** dass die Halterung Halteelemente (4, 4') zur Fixierung des Rotors in einer durch die Ausgleichsstellenteilung definierten Raststellung aufweist, und
dass ein Halteelement (4) der Halterung zumindest einer zwischen den Ausgleichsstellen zur Materialentfernung liegenden möglichen Ausgleichsstelle zugeordnet ist.

5. Vorrichtung nach Anspruch 4, **dadurch gekennzeichnet, dass** das Halteelement (4, 4') als Gegenlager ausgebildet ist.

## Claims

1. A process for compensating for an unbalance determined on a rotor (1) including along a rotor circumference equidistantly arranged compensating locations for correcting an unbalanced condition by material removal, where provision is made for compensating tools (5, 5') arranged at a fixed relative distance and the compensating tools (5, 5') are adapted to be positioned in a tangential direction transversely to the rotor axis by a displacement between rotor (1) and compensating tools (5, 5') resulting from the determined rotor unbalance, and, for material removal, are movable into the rotor (1) by a displacement resulting from the determined rotor unbalance at least in radial direction between rotor (1) and compensating tools (5, 5'), where provision is made for only two compensating tools (5, 5') which, during the process of unbalance compensation, are always jointly moved into engagement with the rotor (1), and the compensating tools (5, 5') generate compensating components of a compensating vector by material removal, where the jointly generated compensating components extend essentially at an angle amounting to an integer multiple of the relative angular spacing of the compensating locations,
**characterized in that**, for unbalance compensation by material removal, the rotor (1) is fixedly held in a notched position defined by the compensating locations by means of a holding fixture, and that a compensating location disposed between the two compensating locations for material removal is utilized for holding the rotor (1).

2. The process according to claim 1, **characterized in that** the advancing of the compensating tools (5, 5') into the rotor (1) takes place approximately in the center of the compensating locations.

3. The process according to any one of the preceding claims, **characterized in that** the compensating components provide for compensation of an unbalance vector lying in an angular range (α) which corresponds to the angular spacing or relative spacing of the compensating locations and extends on either side of a compensating location or on either side of a center plane lying between the two compensating locations used for the generation of compensating components.

4. A device for compensating for an unbalance determined on a rotor (1) including along a rotor circumference equidistantly arranged compensating locations for correcting an unbalanced condition by material removal, with a holding fixture for the rotor (1) and only two compensating tools (5, 5') arranged at a fixed relative distance, where the rotor (1) and/or the compensating tools (5, 5') are displaceable in a tangential and radial direction, where the compensating tools (5, 5') are arranged at a relative distance (A) corresponding substantially to an integer multiple greater than one of the angular spacing of the compensating locations,
**characterized in that** the holding fixture includes holding elements (4, 4') for fixedly holding the rotor in a notched position defined by the angular spacing of the compensating locations, and that a holding element (4) of the holding fixture is associated with at least one possible compensating location lying between the compensating locations for material removal.

5. The device according to claim 4, **characterized in that** the holding element (4, 4') is configured as a counter support.

## Revendications

1. Procédé de compensation d'un balourd détecté sur un rotor (1) qui possède le long de sa périphérie des zones d'équilibrage équidistantes destinées à la compensation du balourd par enlèvement de matière, dans lequel il est prévu des outils d'équilibrage (5, 5'), qui sont disposés l'un en face de l'autre à une distance fixe et dans lequel les outils d'équilibrage (5, 5') peuvent être positionnés transversalement à l'axe du rotor par un mouvement en translation, résultant du balourd détecté sur le rotor, entre le rotor (1) et les outils d'équilibrage (5, 5') dans la direction tangentielle et, en vue de l'enlèvement de matière, peuvent être déplacés vers l'intérieur du rotor (1) par un mouvement en translation, résultant du balourd détecté sur le rotor, au moins dans la direction radiale entre le rotor (1) et les outils d'équilibrage (5, 5'), seuls deux outils d'équilibrage (5, 5') étant prévus, lesquels, au moment de la compensation du balourd, sont toujours amenés conjointement en prise avec le rotor (1), et des composantes d'équilibrage d'un vecteur d'équilibrage étant réalisées par enlèvement de matière avec les outils d'équilibrage (5, 5'), sachant que les composantes d'équilibrage générées conjointement s'étendent en formant entre elles un angle d'un multiple entier de la subdivision des zones d'équilibrage, **caractérisé en ce que** le rotor (1), en vue de la compensation du balourd par enlèvement de matière, est fixé au moyen d'un système de fixation dans une position de blocage définie par les zones d'équilibrage, et **en ce qu'**une zone d'équilibrage, disposée entre les deux zones d'équilibrage pour l'enlèvement de matière, est utilisée pour la fixation du rotor (1).

2. Procédé selon la revendication 1, **caractérisé en ce que** les outils d'équilibrage (5, 5') pénètrent dans le rotor (1) sensiblement au milieu des zones d'équilibrage.

3. Procédé selon l'une quelconque des revendications précédentes, **caractérisé en ce qu'**avec les composantes d'équilibrage on équilibre un vecteur du balourd qui se situe dans une zone angulaire (α) qui correspond à la subdivision angulaire ou subdivision des zones d'équilibrage et qui s'étend de part et d'autre d'une zone d'équilibrage ou de part et d'autre d'un plan médian qui se situe entre les deux zones d'équilibrage utilisées pour générer des composantes d'équilibrage.

4. Dispositif de compensation d'un balourd détecté sur un rotor (1) qui possède le long de sa périphérie des zones d'équilibrage équidistantes destinées à la compensation du balourd par enlèvement de matière, comportant un système de fixation pour le rotor (1) et comportant seulement deux outils d'équilibrage (5, 5') disposés l'un en face de l'autre à une distance fixe, le rotor (1) et/ou les outils d'équilibrage (5, 5') pouvant être déplacés en translation dans la direction tangentielle et radiale, les outils d'équilibrage (5, 5') étant disposés l'un par rapport à l'autre à une distance (A) correspondant sensiblement à un multiple entier supérieur à un de la subdivision des zones d'équilibrage, **caractérisé en ce que** le système de fixation comporte des éléments de fixation (4, 4') pour immobiliser le rotor dans une position de blocage définie par la subdivision des zones d'équilibrage, et **en ce qu'**un élément de fixation (4) du système de fixation est associé à au moins une zone d'équilibrage possible située entre les zones d'équilibrage pour l'enlèvement de matière.

5. Dispositif selon la revendication 4, **caractérisé en ce que** l'élément de fixation (4, 4') forme une contre-butée.
